# EUROPEAN PATENT SPECIFICATION

(11) **EP 3 943 318 B1**
(45) Date of publication and mention of the grant of the patent: **29.11.2023**
(21) Application number: 21180750.8
(22) Date of filing: 22.06.2021
(51) Int. Cl.: B60C 9/20, B60C 9/22

(54) **PNEUMATIC TYRE**
LUFTREIFEN
PNEUMATIQUE

(30) Priority: 21.07.2020 JP 2020124623; 20.05.2021 JP 2021085552
(43) Date of publication of application: 26.01.2022
(73) Proprietor: Sumitomo Rubber Industries, Ltd., Kobe-shi, Hyogo-ken 651-0072 (JP)
(72) Inventor: FUJITA, Masayuki, Kobe-shi, Hyogo, 651-0072 (JP)
(74) Representative: Manitz Finsterwald Patent- und Rechtsanwaltspartnerschaft mbB

(56) References cited:
- EP-A1- 0 319 588
- WO-A1-2006/032479
- DE-C1- 19 801 254
- JP-A- 2008 247 074
- JP-A- 2019 006 203

## Description

### BACKGOUND ART

### Field of the invention

The present invention relates to a pneumatic tyre including a carcass, a belt layer and a band layer.

### Description of the Related Art

Conventionally, pneumatic tyres which include a carcass, a belt layer disposed outwardly in the tyre radial direction of the carcass, and a band layer disposed outwardly in the tyre radial direction of the belt layer are known. For example, the following Patent document 1 discloses a tyre which includes a pair of first reinforcing rubber layers disposed between a belt layer and a band layer to cover axially outer edges of the belt layer. The tyre may improve durability and grip performance.

### [Patent document]

[Patent document 1]
Japanese Unexamined Patent Application Publication 2019-006203;

JP 2019 006203 A discloses a pneumatic tyre comprising the features according to the preamble of claim 1.

WO 2006/032479 A1 discloses a pneumatic tyre comprising features according to a related technology.

DE 198 01 254 C1 also discloses a pneumatic tyre comprising features according to a related technology.

### SUMMARY OF THE INVENTION

Unfortunately, in the tyre disclosed in Patent document 1, the first reinforcing rubber layers become thinner due to restraining force of the band layer, and the outer edges of the belt layer could damage the band layer through the first reinforcing rubber layers at high-speed traveling. Thus, even in the tyre disclosed in Patent document 1, further improvement has been required in terms of achieving both steering stability and durability.

The present invention has been made in view of the above circumstances and has a major object to provide a pneumatic tyre that can achieve both steering stability and durability at high speeds at a high level.

This object is satisfied by a pneumatic tyre comprising the features of claim 1.

In one aspect of the present invention, the pneumatic tyre includes a tread portion, a pair of sidewall portions, a pair of bead portions, a carcass extending between the pair of bead portions through the tread portion and the pair of sidewall portions, a belt layer disposed outwardly in a tyre radial direction of the carcass, the belt layer including at least two belt plies, a band layer disposed outwardly in the tyre radial direction of the belt layer, and a pair of belt-edge rubbers disposed between the belt layer and the band layer to cover axially outer edges of the belt layer, wherein the band layer includes at least one full band and a pair of edge bands covering the axially outer edges of the belt layer, the pair of edge bands includes one or more organic fiber cords, and the organic fiber cords of the pair of edge bands each have restraining force in a range from 5 to 35 N at radially outward locations of the outer edges of the belt layer.

In another aspect of the present invention, in a tyre cross-sectional view including a tyre axis, the tread portion has a pair of tread edges and a tread profile extending between the pair of tread edges, and when a pair of virtual first straight lines that extends from a center position in a tyre axial direction of the tread profile to the respective tread edges is drawn, an angle of the pair of virtual first straight lines may be equal to or more than 2 degrees with respect to the tyre axial direction.

In another aspect of the present invention, the at least two belt plies may include a first belt ply and a second belt ply disposed outwardly in the tyre radial direction of the first belt ply, the axially outer edges of the belt layer may include a pair of axially first outer edges of the first belt ply and a pair of second outer edges of the second belt ply, and the pair of second outer edges may be located outwardly in the tyre axial direction of the pair of tread edges, and is located inwardly in the tyre axial direction of the pair of first outer edges.

In another aspect of the present invention, a distance in the tyre axial direction between the pair of second outer edges and the pair of tread edges may be in a range from 5 to 20 mm.

In another aspect of the present invention, the tread portion may have a pair of outer profiles that extends outwardly in the tyre axial direction from the pair of tread edges, the pair of outer profiles having a pair of radially outer positions (P2) located radially outwardly of the pair of second outer edges of the second belt ply, and when a pair of virtual second straight lines that extends from the pair of tread edges to the respective radially outer positions (P2) is drawn, an angle of the pair of virtual second straight lines may be in a range from 10 to 30 degrees with respect to the pair of virtual first straight line.

In another aspect of the present invention, the pair of belt-edge rubbers may extend from a position outwardly in the tyre axial direction of the pair of first outer edges to a position inwardly in the tyre axial direction of the pair of second outer edges.

In another aspect of the present invention, each of the pair of belt-edge rubbers may have a width in the tyre axial direction of from 10 to 50 mm.

In another aspect of the present invention, each of the pair of edge bands may have a width in the tyre axial direction of from 20 to 50 mm.

In another aspect of the present invention, a distance in a tyre radial direction between the respective axially outer edges of the belt layer and the band layer may be in a range from 0.2 to 2.0 mm.

In another aspect of the present invention, the organic fiber cords may have a total fineness of from 900 to 5500 dtex.

In another aspect of the present invention, a density of the organic fiber cords is in a range of 30 to 60 ends per 5 cm of each edge band width.

### BRIEF DESCRIPTION OF THE DRAWINGS

FIG. 1 is a cross-sectional view of a pneumatic tyre according to an embodiment of the present invention.
FIG. 2 is a partial cross-sectional view of a tread portion.

### DESCRIPTION OF THE PREFERRED EMBODIMENTS

An embodiment of the present invention will be explained below with reference to the accompanying drawings.

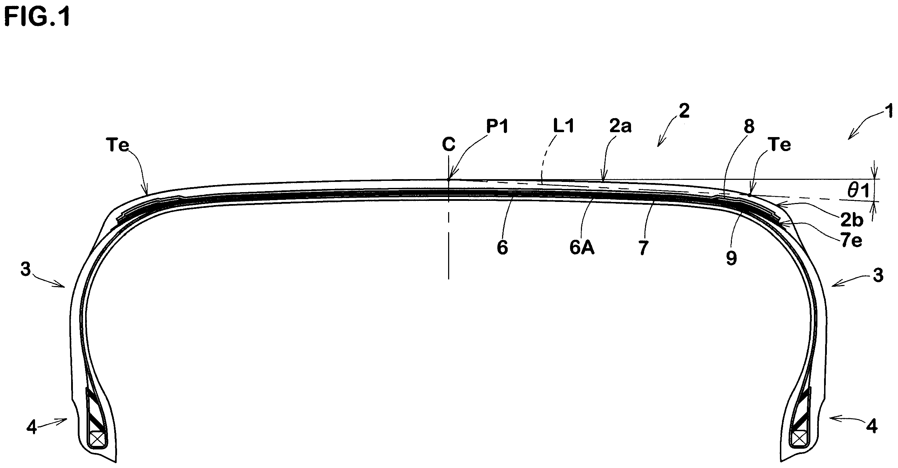

FIG. 1 is a cross-sectional view including a tyre axis (not illustrated) of a pneumatic tyre 1 (hereinafter, may be simply referred to as the "tyre 1") under a normal state according to an embodiment of the present invention. The tyre 1 according to the present embodiment may be suitably used as a low-profile tyre suitable for a racing vehicle. However, the tyre 1 is not limited to a low-profile tyre for racing.

As used herein, the "normal state" is such that the tyre 1 is mounted onto a standard wheel rim with a standard pressure but loaded with no tyre load. Unless otherwise noted, dimensions of portions of the tyre 1 are values measured under the normal state.

As used herein, the "standard wheel rim" is a wheel rim officially approved for each tyre by standards organizations on which the tyre is based, wherein the standard wheel rim is the "standard rim" specified in JATMA, the "Design Rim" in TRA, and the "Measuring Rim" in ETRTO, for example. If there is no standards system including the standard on which the tyre 1 is based, the "standard wheel rim" is a rim defined by the tyre manufacturer.

As used herein, the "standard pressure" is a standard pressure officially approved for each tyre by standards organizations on which the tyre is based, wherein the standard pressure is the "maximum air pressure" in JATMA, the maximum pressure given in the "Tire Load Limits at Various Cold Inflation Pressures" table in TRA, and the "Inflation Pressure" in ETRTO, for example. If there is no standards system including the standard on which the tyre 1 is based, the "standard pressure" is an inner pressure defined by the tyre manufacturer.

As illustrated in FIG. 1, the tyre 1 according to the present embodiment includes a tread portion 2 that comes into contact with the ground when traveling, a pair of sidewall portions 3 located on both sides in the tyre axial direction of the tread portion 2, and a pair of bead portions 4 located inwardly in the tyre radial direction of the pair of sidewall portions 3.

The tyre 1 according to the present embodiment further includes a carcass 6, a belt layer 7 disposed outwardly in the tyre radial direction of the carcass 6, and a band layer 8 disposed outwardly in the tyre radial direction of the belt layer 7. The tyre 1 according to the present embodiment further includes a pair of belt-edge rubbers 9 disposed between the belt layer 7 and the band layer 8 so as to cover axially outer edges 7e of the belt layer 7.

Preferably, the carcass 6 includes at least one carcass ply 6A which extends between the pair of bead portions 4 through the tread portion 2 and the pair of sidewall portions 3. Although not illustrated, the carcass 6 may include two or more carcass plies, for example. The carcass ply 6A may include a pair of end portions that is turned up in the bead portions 4 and extends radially outwardly, e.g., to the tread portion 2. Alternatively, the end portions of the carcass ply 6A may terminate without being turned up in the bead portions 4.

The carcass ply 6A, for example, includes carcass cords which are oriented at an angle of from 60 to 90 degrees with respect to the tyre circumferential direction. As the carcass cords, for example, organic fibers such as nylon, polyester, rayon and aramid can preferably be employed.

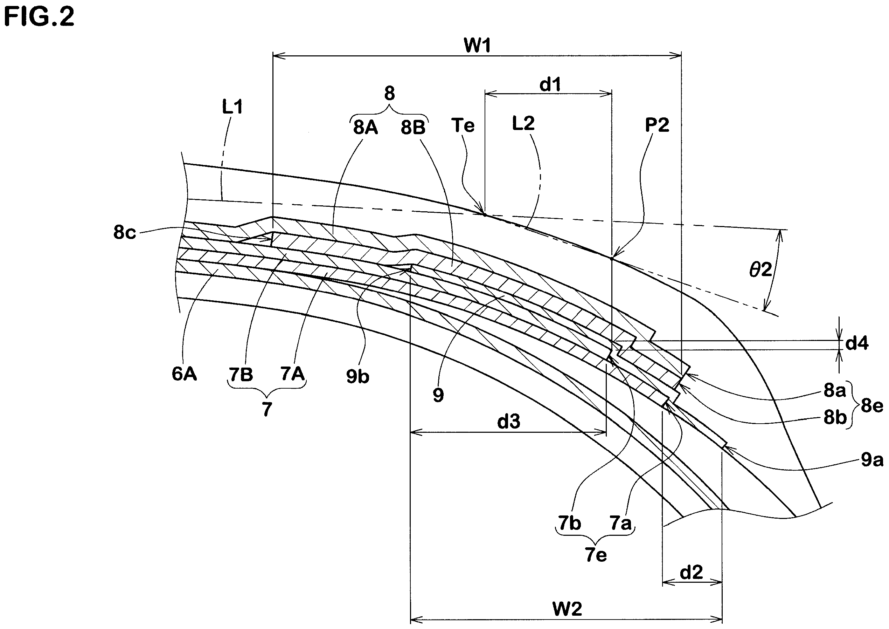

FIG. 2 is a partial cross-sectional view of the tread portion 2. As illustrated in FIG. 2, the belt layer 7 includes at least two belt plies 7A and 7B. In this embodiment, the belt layer 7 is composed of two belt plies 7A and 7B. The belt plies 7A and 7B, for example, includes a first belt ply 7A and a second belt ply 7B disposed outwardly in the tyre radial direction of the first belt ply 7A. Such tyre 1 can improve rigidity by the belt layer 7, and can exhibit excellent steering stability.

The belt plies 7A and 7B, for example, include belt cords which are oriented at an angle of from 10 to 45 degrees with respect to the tyre circumferential direction. As the belt cords, for example, highly elastic material cords such as steel cord can preferably be used. Preferably, the belt cords of the first belt ply 7A and the belt cords of the second belt ply 7B are inclined in opposite directions with each other.

The band layer 8 includes at least one ply. In the present embodiment, the band layer includes a single full band 8A and a pair of edge bands 8B covering the axially outer edges 7e of the belt layer 7. In the present embodiment, the full band 8A and the pair of edge bands 8B include organic fiber cords. In the full band 8A and the pair of edge bands 8B, the organic fiber cords are preferably oriented at an angle equal to or less than 5 degrees with respect to the tyre circumferential direction. As the organic fiber cords, for example, nylon, rayon, aramid, etc. can be employed.

In the present embodiment, the organic fiber cords of the pair of edge bands 8B each have restraining force in a range from 5 to 35 N at radially outward locations of the outer edges 7e of the belt layer 7. Here, the restraining force of each organic fiber cords of the edge bands 8B can be measured in the following way by taking out only the edge bands 8B from the tyre 1.

First, the length of the vulcanized edge band 8B taken out from the tyre 1 is measured. Next, the edge band 8B is left to stand for 21 to 27 hours in an environment where the temperature is 18 to 22 degrees C, and the humidity is 61% to 69%, and the length of the edge band 8B after leaving is measured. Then, from the difference in length of the edge band 8B before and after being left, the elongation of the edge band 8B when it had been arranged in the tyre 1 can be obtained.

Next, the relationship between the tension and the elongation of one organic fiber cord of the edge band 8B is required. This relationship is obtained by measuring the elongation in a tensile test in which tension is gradually applied to the organic fiber cord of the edge band 8B. Then, the restraining force of the organic fiber cord of the edge band 8B is obtained from this relationship and the elongation of the edge band 8B when it had been arranged in the tyre.

In this way, since the restraining force of the edge bands 8B is small, the belt-edge rubbers 9 does not become thin due to compression by the edge bands 8B, and thus contact between the outer edges 7e of the belt layer 7 and the band layer 8 can reliably be suppressed. Thus, the tyre 1 according to the present embodiment can achieve both steering stability and durability at high-speed traveling at a high level.

When the restraining force of the organic fiber cords of the edge bands 8B is equal to or more than 5N, the number of organic fiber cords in the edge bands 8B can be reduced. This helps to reduce the contact of organic fiber cords with each other in the edge bands 8B and improves durability of the tyre 1. From this point of view, the restraining force of the organic fiber cords of the edge bands 8B is preferably equal to or more than 10 N, more preferably equal to or more than 15 N.

When the restraining force of the organic fiber cords of the edge bands 8B is equal to or less than 35N, the contact between the outer edges 7e of the belt layer 7 and the band layer 8 can reliably be suppressed, and durability of the tyre 1 can be improved. From this point of view, the restraining force of the edge bands 8B is preferably equal to or less than 30 N, more preferably equal to or less than 25 N.

As more preferable embodiments, the belt layer 7 may adopt a cut-ply structure in which the outer edges 7e are not folded back. The outer edges 7e of the belt layer 7 of the present embodiment include a pair of first outer edges 7a of the first belt ply 7A and a pair of second outer edges 7b of the second belt ply 7B.

Preferably, the pair of second outer edges 7b is located outwardly in the tyre axial direction of the pair of tread edges Te, and is located inwardly in the tyre axial direction of the pair of first outer edges 7a. Since the positions of the outer edges 7e are located outside the ground contacting patch of the tread portion 2, distortion applying to the outer edges 7e can be reduced, and durability of the tyre 1 can be improved.

As used herein, the "tread edges Te" are the axial outermost edges of the ground contacting patch of the tyre 1 which occurs under a normal loaded condition such that the tyre under the normal state is grounded on a plane with a standard tyre load at zero camber angles. Note that the central position in the tyre axial direction between the pair of the tread edges Te is the tyre equator C.

As used herein, the "standard tyre load" is a tyre load officially approved for each tyre by standards organizations in which the tyre is based, wherein the standard tyre load is the "maximum load capacity" in JATMA, the maximum value given in the above-mentioned table in TRA, and the "Load Capacity" in ETRTO, for example. If there is no standards system on which the tyre 1 is based, the "standard tyre load" is the load determined by the tyre manufacturer for each tyre.

Preferably, a distance d1 in the tyre axial direction between the pair of second outer edges 7b and the pair of tread edges Te is in a range from 5 to 20 mm. By setting the distance d1 to 5 mm or more, it is possible to prevent the second outer edges 7b from coming into contact with the ground when the tyre 1 comes into contact with the ground, and durability of the tyre 1 can further be improved. From this point of view, the distance d1 is more preferably equal to or more than 7 mm, even more preferably equal to or more than 8 mm.

By setting the distance d1 to 20 mm or less, a sufficient ground contact width can be ensured, and steering stability of the tyre 1 can be improved. From this point of view, the distance d1 is more preferably equal to or less than 15 mm, even more preferably equal to or less than 10 mm.

As illustrated in FIG. 1, in a tyre cross-sectional view including a tyre axis, the tread portion 2 according to the present embodiment includes the pair of tread edges Te, a tread profile 2a extending between the pair of tread edges Te, and a pair of outer profiles 2b extending outwardly in the tyre axial direction of the pair of tread edges Te. The tread profile 2a and the pair of outer profiles 2b each are configured to include at least one circular arc. Such tread portion 2 has a smooth shape change in the tyre axial direction, and is suitable for achieving both steering stability and durability of the tyre 1.

When a pair of virtual first straight lines L1 that extends from a center position P1 in the tyre axial direction of the tread profile 2a to the respective tread edges Te is drawn, an angle θ1 of the pair of virtual first straight lines L1 is preferably equal to or more than 2 degrees with respect to the tyre axial direction, more preferably equal to or more than 2.5 degrees, still further preferably equal to or more than 3 degrees. Such a tread profile 2a has less distortion at the tread edges Te, reducing the distortion of the outer edges 7e of the belt layer 7 so that durability of the tyre 1 can further be improved.

As illustrated in FIG. 2, when a pair of virtual second straight lines L2 that extends from the pair of tread edges Te to respective radially outer positions P2 is drawn, an angle Θ2 of the pair of virtual second straight lines L2 is preferably in a range from 10 to 30 degrees with respect to the pair of virtual first straight lines L1. Here, the radially outer positions P2 are positions on the respective outer profiles 2b which are located radially outwardly of the pair of second outer edges 7b of the second belt ply 7B.

By setting the angle Θ2 to 10 degrees or more, even when a large load is applied to tyre 1, distortion of the second outer edges 7b can be reduced and durability of the tyre 1 can be improved. From this point of view, the angle Θ2 is more preferably equal to or more than 12 degrees, still further preferably equal to or more than 15 degrees.

By setting the angle Θ2 to 30 degrees or less, distortion of the second outer edges 7b during tyre molding can be reduced and durability of the tyre 1 can be improved. From this point of view, the angle Θ2 is more preferably equal to or less than 25 degrees. still further preferably equal to or less than 20 degrees.

In the band layer 8 according to the present embodiment, the pair of edge bands 8B is disposed between the full band 8A and the belt layer 7. The band layer 8 preferably has a pair of axially outer band ends 8e that is aligned with the first outer edges 7a.

The outer band ends 8e according to the present embodiment includes a pair of first band ends 8a of the full band 8A, and a pair of second band ends 8b of the pair of edge bands 8B. The first band ends 8a and the second band ends 8b are preferably aligned with the first outer edges 7a. Such a band layer 8 can reliably cover the outer edges 7e of the belt layer 7. In addition, since it can prevent the band layer 8 from becoming excessively large, it is suitable for achieving both steering stability and durability of the tyre 1.

Each of the pair of edge bands 8B preferably has a width W1 of from 20 to 50 mm in the tyre axial direction. By setting the width W1 to 20 mm or more, the outer edges 7e of the belt layer 7 can be reliably covered, and durability of the tyre 1 can be improved. From this point of view, the width W1 is more preferably equal to or more than 25 mm, still further preferably equal to or more than 30 mm.

By setting the width W1 to 50 mm or less, the overall weight can be reduced, which helps to reduce the weight of the tyre 1. From this point of view, the width W1 is more preferably equal to or less than 45 mm, further preferably equal to or less than 40 mm.

In the present embodiment, the edge bands 8B have innermost band ends 8c in the tyre axial direction which are located inwardly in the tyre axial direction of the respective tread edges Te. Such edge bands 8B can increase the restraining force when coming into contact with the ground, reducing distortion of the outer edges 7e of the belt layer 7, improving durability of the tyre 1.

Preferably, the organic fiber cords of the band layer 8 each have a total fineness of from 900 to 5500 dtex. As used herein, the total fineness of an organic fiber cord is defined as the actual thickness of the organic fiber cord. When an organic fiber cord, for example, is made of a plurality of yarns twisted, the total fineness of the organic fiber cord is obtained by adding each total fineness of the plurality of yarns.

By setting the total fineness to 900 dtex or more, distortion of the outer edges 7e of the belt layer 7 can be reduced, and durability of the tyre 1 can be improved. From this point of view, the total fineness is preferably equal to or more than 1500 dtex, more preferably equal to or more than 2000 dtex.

By setting the total fineness to 5500 dtex or less, energy loss can be reduced and the steering stability of the tyre 1 can be improved. From this point of view, the total fineness is more preferably equal to or less than 5000 dtex, still further preferably equal to or less than 4500 dtex.

Preferably, a density of the organic fiber cords is in a range of 30 to 60 ends per 5 cm of each edge band 8B width. Here, when the band width of the edge band 8B is less than 5 cm, for example, the number of organic fiber cords per 5 cm width can be obtained based on the number of organic fiber cords arranged per unit width.

By setting the cord ends to 30 or more, distortion of the outer edges 7e of the belt layer 7 can be reduced, and durability of the tyre 1 can be improved. From this point of view, the cord ends are more preferably equal to or more than 35, still further preferably equal to or more than 40.

By setting the cord ends to 60 or less, energy loss can be reduced and steering stability of the tyre 1 is improved. From this point of view, the cord ends are more preferably equal to or less than 55, still further preferably equal to or less than 50.

In the present embodiment, the pair of belt-edge rubbers 9 extends from a position outwardly in the tyre axial direction of the pair of first outer edges 7a to a position inwardly in the tyre axial direction of the pair of second outer edges 7b. Namely, the belt-edge rubbers 9 have first outer ends 9a in the tyre axial direction that are located outwardly in the tyre axial direction of the first outer edges 7a, and second inner ends 9b that are located inwardly in the tyre axial direction of the second outer edges 7b.

Preferably, a distance d2 in the tyre axial direction between the first outer ends 9a and the first outer edges 7a is in a range from 5 to 45 mm. By setting the distance d2 to 5 mm or more, the first outer edges 7a can be reliably covered and durability of the tyre 1 can be improved. From this point of view, the distance d2 is more preferably equal to or more than 7 mm, still further preferably equal to or more than 10 mm.

By setting the distance d2 to 45 mm or less, it is possible to suppress an excessive decrease in rigidity, resulting in improving steering stability of the tyre 1. From this point of view, the distance d2 is more preferably equal to or less than 40 mm, still further preferably equal to or less than 30 mm.

Preferably, a distance d3 in the tyre axial direction between the second outer ends 9b and the second outer edges 7b is in a range from 5 to 45 mm. By setting the distance d3 to 5 mm or more, the second outer edges 7b can be reliably covered and durability of the tyre 1 can be improved. From this point of view, the distance d3 is more preferably equal to or more than 7 mm, still further preferably equal to or more than 10 mm.

By setting the distance d3 to 45 mm or less, it is possible to suppress an excessive decrease in rigidity, resulting in improving steering stability of the tyre 1. From this point of view, the distance d3 is more preferably equal to or less than 40 mm, still further preferably equal to or less than 30 mm.

Preferably, a width W2 in the tyre axial direction of the belt-edge rubbers 9 is in a range from 10 to 50 mm. By setting the width W2 to 10 mm or more, the outer edges 7e of the belt layer 7 can be reliably covered, and durability of the tyre 1 can be improved. From this point of view, the width W2 is more preferably equal to or more than 15 mm, still further preferably equal to or more than 20 mm.

By setting the width W2 to 50 mm or less, it is possible to suppress an excessive decrease in rigidity, resulting in improving steering stability of the tyre 1. From this point of view, the width W2 is more preferably equal to or less than 45 mm, still further preferably equal to or less than 40 mm.

Preferably, the belt-edge rubbers 9 have a loss tangent tan δ at 70 degrees C. of from 0.05 to 0.18. By setting the loss tangent tan δ at 70 degrees C. to 0.05 or more, shock absorption of the tyre 1 can be improved, and ride comfort of the tyre 1 can be improved. From this point of view, the loss tangent tan δ at 70 degrees C. is more preferably equal to or more than 0.07, still further preferably equal to or more than 0.09.

By setting the loss tangent tan δ at 70 degrees C. to 0.18 or less, excessive heat generation can be suppressed and durability of the tyre 1 can be improved. From this point of view, the loss tangent tan δ at 70 degrees C. is more preferably equal to or less than 0.16, still further preferably equal to or less than 0.14.

Note that loss tangent tan δ is the value measured by using a "viscoelastic spectrometer" under the following conditions, according to the specification of JIS-K6394:
initial strain 10%;
amplitude +/- 1%;
frequency 10 Hz;
tensile deformation mode; and
measured temperature 70 degrees C.

Preferably, distances d4 in the tyre radial direction between the outer edges 7e of the belt layer 7 and the band layer 8 is in a range from 0.2 to 2.0 mm. The distances d4 between the outer edges 7e and the band layer 8 is distances between the first outer edges 7a and the band layer 8, and the distances between the second outer edges 7b and the band layer 8. Further, such a distance d4 is preferably maintained over a pair of entire regions from the first outer edges 7a to the respective second outer edges 7b.

By setting the distance d4 to 0.2 mm or more, it is possible to surely prevent the outer edges 7e of the belt layer 7 from coming into contact with the band layer 8 and improve the durability of the tyre 1. From this point of view, the distance d4 is more preferably equal to or more than 0.3 mm, still further preferably equal to or more than 0.4 mm.

By setting the distance d4 to 2.0 mm or less, the rigidity near the outer edges 7e of the belt layer 7 can be improved, and steering stability of the tyre 1 can be improved. From this point of view, the distance d4 is more preferably equal to or less than 1.5 mm, still further preferably equal to or less than 1.0 mm.

While the particularly preferable embodiments in accordance with the present invention have been described in detail, the present invention is not limited to the illustrated embodiments, but can be modified and carried out in various aspects within the scope of the appended claims.

### [Example]

Pneumatic tyres for racing vehicle with the basic structure of FIG. 1 were prototyped based on the specifications in Tables 1 to 4. Then, steering stability and durability of these prototype tyres were tested. The common specifications and test methods for each prototype tyre are as follows.

### [Common specifications]

Tyre size: 290/680R18
Rim size: 18×11.0J
Inner pressure: 200 kPa

### [Steering stability test]

Each prototype tyre was installed on all wheels of a rear-wheel drive vehicle with a displacement of 3.5 liters with a negative camber angle of 3 degrees. Then, the responsiveness of the vehicle to steering when one test driver got on board and ran on a dry pavement course was evaluated by the sensuality of the test driver. In Tables 1 to 4, the results are indicated as an index with Ref. 1 as 100, and the larger the value, the better the steering stability.

### [Durability test]

Each prototype tyre was mounted on a drum tester with a negative camber angle of 3 degrees. Then, the running time until the tyres were destroyed when running at a speed of 200 km/h with a vertical load of 7 ken was measured. In tables 1 to 4, the results are indicated as an index with Ref. 1 as 100, and the larger the value, the better the durability.

The test results are shown in Tables 1 to 4.

**[Table 1]**

| | Ref. 1 | Ref. 2 | Ref. 3 | Ex. 1 | Ex. 2 | Ex. 3 | Ex. 4 | Ex. 5 | Ex. 6 |
|---|---|---|---|---|---|---|---|---|---|
| Edge band organic fiber cord restraining force (N) | 50 | 2 | 20 | 5 | 12.5 | 20 | 27.5 | 35 | 20 |
| Width W2 of belt-edge rubbers (mm) | 25 | 25 | 0 | 25 | 25 | 25 | 25 | 25 | 10 |
| Angle θ1 of virtual first straight line (deg.) | 3 | 3 | 3 | 3 | 3 | 3 | 3 | 3 | 3 |
| Angle θ2 of virtual second straight line (deg.) | 10 | 10 | 10 | 10 | 10 | 10 | 10 | 10 | 10 |
| Distance d1 between second outer edges and tread edges (mm) | 10 | 10 | 10 | 10 | 10 | 10 | 10 | 10 | 10 |
| Distance d3 between second outer ends and second outer edges (mm) | 20 | 20 | 20 | 20 | 20 | 20 | 20 | 20 | 20 |
| Distances d4 between outer edges and the band layer (mm) | 0 | 1 | 0 | 1 | 1 | 1 | 0.6 | 0.2 | 1 |
| Width W1 of edge bands (mm) | 30 | 30 | 30 | 30 | 30 | 30 | 30 | 30 | 30 |
| Total fineness of organic fiber cords (dtex) | 4000 | 4000 | 4000 | 4000 | 4000 | 4000 | 4000 | 4000 | 4000 |
| Density of organic fiber cords (ends/5cm) | 40 | 40 | 40 | 40 | 40 | 40 | 40 | 40 | 40 |
| Steering stability (index) | 100 | 100 | 100 | 100 | 100 | 100 | 100 | 100 | 100 |
| Durability (index) | 100 | 100 | 105 | 110 | 120 | 130 | 120 | 110 | 115 |

**[Table 2]**

| | Ex. 7 | Ex. 8 | Ex. 9 | Ex. 10 | Ex. 11 | Ex. 12 | Ex. 13 | Ex. 14 | Ex. 15 |
|---|---|---|---|---|---|---|---|---|---|
| Edge band organic fiber cord restraining force (N) | 20 | 20 | 20 | 20 | 20 | 20 | 20 | 20 | 20 |
| Width W2 of belt-edge rubbers (mm) | 20 | 40 | 50 | 25 | 25 | 25 | 25 | 25 | 25 |
| Angle θ1 of virtual first straight line (deg.) | 3 | 3 | 3 | 2 | 4 | 3 | 3 | 3 | 3 |
| Angle θ2 of virtual second straight line (deg.) | 10 | 10 | 10 | 10 | 10 | 5 | 30 | 40 | 10 |
| Distance d1 between second outer edges and tread edges (mm) | 10 | 10 | 10 | 10 | 10 | 10 | 10 | 10 | 0 |
| Distance d3 between second outer ends and second outer edges (mm) | 20 | 20 | 20 | 20 | 20 | 20 | 20 | 20 | 20 |
| Distances d4 between outer edges and the band layer (mm) | 1 | 1 | 1 | 1 | 1 | 1 | 1 | 1 | 1 |
| Width W1 of edge bands (mm) | 30 | 30 | 30 | 30 | 30 | 30 | 30 | 30 | 30 |
| Total fineness of organic fiber cords (dtex) | 4000 | 4000 | 4000 | 4000 | 4000 | 4000 | 4000 | 4000 | 4000 |
| Density of organic fiber cords (ends/5cm) | 40 | 40 | 40 | 40 | 40 | 40 | 40 | 40 | 40 |
| Steering stability (index) | 100 | 99 | 98 | 100 | 98 | 100 | 100 | 100 | 100 |
| Durability (index) | 120 | 130 | 130 | 125 | 130 | 110 | 130 | 110 | 110 |

**[Table 3]**

| | Ex. 16 | Ex. 17 | Ex. 18 | Ex. 19 | Ex. 20 | Ex. 21 | Ex. 22 | Ex. 23 | Ex. 24 |
|---|---|---|---|---|---|---|---|---|---|
| Edge band organic fiber cord restraining force (N) | 20 | 20 | 20 | 20 | 20 | 20 | 20 | 20 | 20 |
| Width W2 of belt-edge rubbers (mm) | 25 | 25 | 25 | 25 | 25 | 25 | 25 | 25 | 25 |
| Angle θ1 of virtual first straight line (deg.) | 3 | 3 | 3 | 3 | 3 | 3 | 3 | 3 | 3 |
| Angle θ2 of virtual second straight line (deg.) | 10 | 10 | 10 | 10 | 10 | 10 | 10 | 10 | 10 |
| Distance d1 between second outer edges and tread edges (mm) | 20 | 25 | 10 | 10 | 10 | 10 | 10 | 10 | 10 |
| Distance d3 between second outer ends and second outer edges (mm) | 20 | 20 | 5 | 10 | 30 | 45 | 20 | 20 | 20 |
| Distances d4 between outer edges and the band layer (mm) | 1 | 1 | 1 | 1 | 1 | 1 | 0.2 | 2 | 1 |
| Width W1 of edge bands (mm) | 30 | 30 | 30 | 30 | 30 | 30 | 30 | 30 | 20 |
| Total fineness of organic fiber cords (dtex) | 4000 | 4000 | 4000 | 4000 | 4000 | 4000 | 4000 | 4000 | 4000 |
| Density of organic fiber cords (ends/5cm) | 40 | 40 | 40 | 40 | 40 | 40 | 40 | 40 | 40 |
| Steering stability (index) | 98 | 95 | 100 | 100 | 99 | 98 | 100 | 98 | 100 |
| Durability (index) | 135 | 130 | 115 | 120 | 130 | 130 | 110 | 120 | 120 |

**[Table 4]**

| | Ex. 25 | Ex. 26 | Ex. 27 | Ex. 28 | Ex. 29 | Ex. 30 | Ex. 31 | Ex. 32 | Ex. 33 |
|---|---|---|---|---|---|---|---|---|---|
| Edge band organic fiber cord restraining force (N) | 20 | 20 | 20 | 20 | 20 | 20 | 20 | 20 | 20 |
| Width W2 of belt-edge rubbers (mm) | 25 | 25 | 25 | 25 | 25 | 25 | 25 | 25 | 25 |
| Angle θ1 of virtual first straight line (deg.) | 3 | 3 | 3 | 3 | 3 | 3 | 3 | 3 | 3 |
| Angle θ2 of virtual second straight line (deg.) | 10 | 10 | 10 | 10 | 10 | 10 | 10 | 10 | 10 |
| Distance d1 between second outer edges and tread edges (mm) | 10 | 10 | 10 | 10 | 10 | 10 | 10 | 10 | 10 |
| Distance d3 between second outer ends and second outer edges (mm) | 20 | 20 | 20 | 20 | 20 | 20 | 20 | 20 | 20 |
| Distances d4 between outer edges and the band layer (mm) | 1 | 1 | 1 | 1 | 1 | 1 | 1 | 1 | 1 |
| Width W1 of edge bands (mm) | 40 | 50 | 30 | 30 | 30 | 30 | 30 | 30 | 30 |
| Total fineness of organic fiber cords (dtex) | 4000 | 4000 | 900 | 2000 | 4500 | 5500 | 4000 | 4000 | 4000 |
| Density of organic fiber cords (ends/5cm) | 40 | 40 | 40 | 40 | 40 | 40 | 30 | 50 | 60 |
| Steering stability (index) | 99 | 98 | 100 | 100 | 99 | 97 | 100 | 99 | 97 |
| Durability (index) | 130 | 130 | 115 | 120 | 131 | 133 | 120 | 131 | 133 |

From the test results, it was confirmed that the tyres of the examples have a total sum of evaluations of steering stability and durability greater than the comparative examples, and have both steering stability and durability at high speeds in well-balanced manner with a high dimension.

## Claims

1. A pneumatic tyre (1) comprising:
a tread portion (2);
a pair of sidewall portions (3);
a pair of bead portions (4);
a carcass (6) extending between the pair of bead portions (4) through the tread portion (2) and the pair of sidewall portions (3);
a belt layer (7) disposed outwardly in a tyre radial direction of the carcass (6), the belt layer (7) comprising at least two belt plies (7A, 7B);
a band layer (8) disposed outwardly in the tyre radial direction of the belt layer (7); and
a pair of belt-edge rubbers (9) disposed between the belt layer (7) and the band layer (8) to cover axially outer edges (7e) of the belt layer (7), wherein
the band layer (8) comprises at least one full band (8A) and a pair of edge bands (8B) covering the axially outer edges (7e) of the belt layer (7), and
the pair of edge bands (8B) comprises one or more organic fiber cords,
**characterized in that**
the organic fiber cords of the pair of edge bands (8B) each have a restraining force in a range from 5 to 35 N at radially outward locations of the outer edges (7e) of the belt layer (7),
wherein the restraining force is measured by
taking out one of the edge bands (8B) from the tyre (1),
obtaining the elongation of the edge band (8B) when it has been arranged in a tyre (1) from the difference in length of the edge band (8B) before and after leaving the edge band (8B) taken out from the tyre (1) to stand for 21 to 27 hours in an environment where the temperature is 18 to 22 degrees C, and the humidity is 61% to 69%,
obtaining a relationship between the tension and the elongation of one organic fiber cord of the edge band (8B) by measuring the elongation in a tensile test in which tension is gradually applied to the organic fiber cord of the edge band (8B), and
obtaining the restraining force of the organic fiber cord of the edge band (8B) from said relationship and the obtained elongation of the edge band (8B) when it has been arranged in the tyre (1).

2. The pneumatic tyre (1) according to claim 1, wherein
in a tyre cross-sectional view including a tyre axis, the tread portion (2) has a pair of tread edges (Te) and a tread profile (2a) extending between the pair of tread edges (Te), and
when a pair of virtual first straight lines (L1) that extends from a center position (P1) in a tyre axial direction of the tread profile (2a) to the respective tread edges (Te) is drawn, an angle (θ1) of the pair of virtual first straight lines (L1) is equal to or more than 2 degrees with respect to the tyre axial direction.

3. The pneumatic tyre (1) according to claim 2, wherein
the at least two belt plies (7A, 7B) comprise a first belt ply (7A) and a second belt (7B) ply disposed outwardly in the tyre radial direction of the first belt ply (7A),
the axially outer edges (7e) of the belt layer (7) comprise a pair of axially first outer edges (7a) of the first belt ply (7A) and a pair of second outer edges (7b) of the second belt ply (7B), and
the pair of second outer edges (7b) is located outwardly in the tyre axial direction of the pair of tread edges (Te), and is located inwardly in the tyre axial direction of the pair of first outer edges (7a).

4. The pneumatic tyre (1) according to claim 3, wherein
a distance (d1) in the tyre axial direction between the pair of second outer edges (7b) and the pair of tread edges (Te) is in a range from 5 to 20 mm.

5. The pneumatic tyre (1) according to claim 3 or 4, wherein
the tread portion (2) has a pair of outer profiles (2b) that extends outwardly in the tyre axial direction from the pair of tread edges (Te), the pair of outer profiles (2b) having a pair of radially outer positions (P2) located radially outwardly of the pair of second outer edges (7e) of the second belt ply (7B), and
when a pair of virtual second straight lines (L2) that extends from the pair of tread edges (Te) to the respective radially outer positions (P2) is drawn, an angle (θ2) of the pair of virtual second straight lines (L2) is in a range from 10 to 30 degrees with respect to the pair of virtual first straight line (L1).

6. The pneumatic tyre (1) according to any one of claims 3 to 5, wherein the pair of belt-edge rubbers (9) extends from a position outwardly in the tyre axial direction of the pair of first outer edges (7a) to a position inwardly in the tyre axial direction of the pair of second outer edges (7b).

7. The pneumatic tyre (1) according to any one of claims 1 to 6, wherein each of the pair of belt-edge rubbers (9) has a width (W2) in the tyre axial direction of from 10 to 50 mm.

8. The pneumatic tyre (1) according to any one of claims 1 to 7, wherein each of the pair of edge bands (8B) has a width (W1) in the tyre axial direction of from 20 to 50 mm.

9. The pneumatic tyre (1) according to any one of claims 1 to 8, wherein a distance (d4) in a tyre radial direction between the respective axially outer edges (7e) of the belt layer (7) and the band layer (8) is in a range from 0.2 to 2.0 mm.

10. The pneumatic tyre (1) according to any one of claims 1 to 9, wherein the organic fiber cords have a total fineness of from 900 to 5500 dtex.

11. The pneumatic tyre (1) according to any one of claims 1 to 10, wherein a density of the organic fiber cords is in a range of 30 to 60 ends per 5 cm of each edge band (8B) width.

## Patentansprüche

1. Luftreifen (1), umfassend:
einen Laufflächenabschnitt (2);
ein Paar von Seitenwandabschnitten (3);
ein Paar von Wulstabschnitten (4);
eine Karkasse (6), die sich zwischen dem Paar von Wulstabschnitten (4) über den Laufflächenabschnitt (2) und das Paar von Seitenwandabschnitten (3) erstreckt;
eine Gürtellage (7), die in einer Reifenradialrichtung außerhalb der Karkasse (6) angeordnet ist, wobei die Gürtellage (7) zumindest zwei Gürtelschichten (7A, 7B) umfasst;
eine Bandlage (8), die in der Reifenradialrichtung außerhalb der Gürtellage (7) angeordnet ist; und
ein Paar von Gürtel-Randgummis (9), die zwischen der Gürtellage (7) und der Bandlage (8) angeordnet sind, um axial äußere Ränder (7e) der Gürtellage (7) zu überdecken, wobei
die Bandlage (8) zumindest ein volles Band (8A) und ein Paar von Randbändern (8B) umfasst, um die axial äußeren Ränder (7e) der Gürtellage (7) überdecken, und
das Paar von Randbändern (8B) einen oder mehrere organische Faserkorde umfasst,
**dadurch gekennzeichnet, dass**
die organischen Faserkorde des Paares von Randbändern (8B) jeweils eine Rückhaltekraft in einem Bereich von 5 bis 35 N an radial äußeren Positionen der äußeren Ränder (7e) der Gürtellage (7) aufweisen,
wobei die Rückhaltekraft gemessen wird, indem
eines der Randbänder (8B) aus dem Reifen (1) entnommen wird,
die Elongation des Randbandes (8B), wenn dieses in einem Reifen (1) angeordnet war, anhand der Differenz in der Länge des Randbandes (8B) vor und nach dem Verweilen des aus dem Reifen (1) entnommen Randbandes (8B) für 21 bis 27 Stunden in einer Umgebung erhalten wird, in der die Temperatur 18 bis 22 Grad C beträgt und die Feuchtigkeit 61% bis 69% beträgt,
eine Beziehung zwischen der Dehnung und der Elongation eines organischen Faserkords des Randbandes (8B) erhalten wird, indem die Elongation in einer Dehnungsprüfung gemessen wird, in der eine Dehnung allmählich auf den organischen Faserkord des Randbandes (8B) ausgeübt wird, und
die Rückhaltekraft des organischen Faserkords des Randbandes (8B) anhand der Beziehung und der erhaltenen Elongation des Randbandes (8B), wenn dieses in dem Reifen (1) angeordnet war, erhalten wird.

2. Luftreifen (1) nach Anspruch 1, wobei
in einer Reifen-Querschnittsansicht, die eine Reifenachse umfasst, der Laufflächenabschnitt (2) ein Paar von Laufflächenrändern (Te) und ein Laufflächenprofil (2a) aufweist, welches sich zwischen dem Paar von Laufflächenrändern (Te) erstreckt, und
dann, wenn ein Paar von virtuellen ersten geraden Linien (L1), das sich von einer Mittelposition (P1) in einer Reifenaxialrichtung des Laufflächenprofils (2a) bis zu den jeweiligen Laufflächenrändern (Te) erstreckt, gezeichnet wird, ein Winkel (θ1) des Paares von virtuellen ersten geraden Linien (L1) gleich oder größer als 2 Grad bezogen auf die Reifenaxialrichtung ist.

3. Luftreifen (1) nach Anspruch 2, wobei
die zumindest zwei Gürtelschichten (7A, 7B) eine erste Gürtelschicht (7A) und eine zweite Gürtelschicht (7B) umfassen, die in der Reifenradialrichtung außerhalb der ersten Gürtelschicht (7A) angeordnet ist,
die axial äußeren Ränder (7e) der Gürtellage (7) ein Paar von axial ersten äußeren Rändern (7a) der ersten Gürtelschicht (7A) und ein Paar von zweiten äußeren Rändern (7b) der zweiten Gürtelschicht (7B) umfassen und
das Paar von zweiten äußeren Rändern (7b) in der Reifenaxialrichtung außerhalb des Paares von Laufflächenrändern (Te) angeordnet ist und in der Reifenaxialrichtung innerhalb des Paares von ersten äußeren Rändern (7a) angeordnet ist.

4. Luftreifen (1) nach Anspruch 3, wobei
eine Distanz (d1) in der Reifenaxialrichtung zwischen dem Paar von zweiten äußeren Rändern (7b) und dem Paar von Laufflächenrändern (Te) in einem Bereich von 5 bis 20 mm liegt.

5. Luftreifen (1) nach Anspruch 3 oder 4, wobei
der Laufflächenabschnitt (2) ein Paar von äußeren Profilen (2b) aufweist, die sich in der Reifenaxialrichtung von dem Paar von Laufflächenrändern (Te) nach außen erstrecken, wobei das Paar von äußeren Profilen (2b) ein Paar von radial äußeren Positionen (P2) aufweist, die radial außerhalb des Paares von zweiten äußeren Rändern (7e) der zweiten Gürtelschicht (7B) angeordnet sind, und
dann, wenn ein Paar von virtuellen zweiten geraden Linien (L2), das sich von dem Paar von Laufflächenrändern (Te) bis zu den jeweiligen radial äußeren Positionen (P2) erstreckt, gezeichnet wird, ein Winkel (θ2) des Paares von virtuellen zweiten geraden Linien (L2) in einem Bereich von 10 bis 30 Grad bezogen auf das Paar von virtuellen ersten geraden Linien (L1) liegt.

6. Luftreifen (1) nach einem der Ansprüche 3 bis 5, wobei
sich das Paar von Gürtel-Randgummis (9) von einer Position, die sich in der Reifenaxialrichtung außerhalb des Paares von ersten äußeren Rändern (7a) befindet, bis zu einer Position erstreckt, die sich in der Reifenaxialrichtung innerhalb des Paares von zweiten äußeren Rändern (7b) befindet.

7. Luftreifen (1) nach einem der Ansprüche 1 bis 6, wobei
jedes von dem Paar von Gürtel-Randgummis (9) eine Breite (W2) in der Reifenaxialrichtung von 10 bis 50 mm aufweist.

8. Luftreifen (1) nach einem der Ansprüche 1 bis 7, wobei
jedes von dem Paar von Randbändern (8B) eine Breite (W1) in der Reifenaxialrichtung von 20 bis 50 mm aufweist.

9. Luftreifen (1) nach einem der Ansprüche 1 bis 8, wobei
eine Distanz (d4) in der Reifenradialrichtung zwischen den jeweiligen axial äußeren Rändern (7e) der Gürtellage (7) und der Bandlage (8) in einem Bereich von 0,2 bis 2,0 mm liegt.

10. Luftreifen (1) nach einem der Ansprüche 1 bis 9, wobei
die organischen Faserkorde eine gesamte Feinheit von 900 bis 5500 dtex aufweisen.

11. Luftreifen (1) nach einem der Ansprüche 1 bis 10, wobei
eine Dichte der organischen Faserkorde in einem Bereich von 30 bis 60 Enden pro 5 cm einer Breite jedes Randbandes (8B) liegt.

## Revendications

1. Bandage pneumatique (1) comprenant :
une portion formant bande de roulement (2) ;
une paire de portions formant parois latérales (3) ;
une paire de portions de talon (4) ;
une carcasse (6) s'étendant entre la paire de portions de talon (4) à travers la portion formant bande de roulement (2) et la paire de portions formant parois latérales (3) ;
une couche de ceinture (7) disposée à l'extérieur dans une direction radiale du pneumatique de la carcasse (6), la couche de ceinture (7) comprenant au moins deux nappes de ceinture (7A, 7B) ;
une couche de bande (8) disposée à l'extérieur dans la direction radiale du pneumatique de la couche de ceinture (7) ; et
une paire de caoutchoucs de bords de ceinture (9) disposés entre la couche de ceinture (7) et la couche de bande (8) pour couvrir des bords axialement extérieurs (7e) de la couche de ceinture (7), dans lequel
la couche de bande (8) comprend au moins une bande complète (8A) et une paire de bandes de bords (8B) couvrant les bords axialement extérieurs (7e) de la couche de ceinture (7), et
la paire de bandes de bords (8B) comprend un ou plusieurs câblés en fibres organiques,
**caractérisé en ce que**
les câblés en fibres organiques de la paire de bandes de bords (8B) ont chacun une force de retenue dans une plage allant de 5 à 35 N à des emplacements radialement extérieurs des bords extérieurs (7e) de la couche de ceinture (7),
dans lequel la force de retenue est mesurée
en retirant du pneumatique (1) une des bandes de bord (8B),
en obtenant l'allongement de la bande de bord (8B) quand elle a été agencée dans un pneumatique (1) à partir de la différence en longueur de la bande de bord (8B) avant et après avoir laissé la bande de bord (8B) retirée du pneumatique (1) pour qu'elle reste pendant 21 à 27 heures dans un environnement où la température est de 18 à 22 degrés C et où l'humidité est de 61 % à 69 %,
en obtenant une relation entre la tension et l'allongement d'un câblé en fibres organiques de la bande de bord (8B) par mesurage de l'allongement dans un test de traction dans lequel une tension est appliquée graduellement aux câblés en fibres organiques de la bande de bord (8B), et
en obtenant la force de retenue du câblé en fibres organiques de la bande de bord (8B) à partir de ladite relation et l'allongement obtenu de la bande de bord (8B) quand elle a été agencée dans le pneumatique (1).

2. Bandage pneumatique (1) selon la revendication 1, dans lequel
dans une vue de section transversale du pneumatique incluant un axe de pneumatique, la portion formant bande de roulement (2) a une paire de bords de bande de roulement (Te) et un profil de bande de roulement (2a) s'étendant entre la paire de bords de bande de roulement (Te), et
quand une paire de premières lignes droites virtuelles (L1) qui s'étendent depuis une position centrale (P1) dans une direction axiale du pneumatique du profil de bande de roulement (2a) jusqu'aux bords de bande de roulement (Te) respectifs sont tirées, un angle (θ1) de la paire de premières lignes droites virtuelles (L1) est égal ou supérieur à 2 degrés par rapport à la direction axiale du pneumatique.

3. Bandage pneumatique (1) selon la revendication 2, dans lequel
lesdites au moins deux nappes de carcasse (7A, 7B) comprennent une première nappe de ceinture (7A) et une seconde nappe de ceinture (7B) disposée à l'extérieur dans la direction radiale du pneumatique de la première nappe de ceinture (7A),
les bords axialement extérieurs (7e) de la couche de ceinture (7) comprennent, axialement, une paire de premiers bords extérieurs (7a) de la première nappe de ceinture (7A) et une paire de seconds bords extérieurs (7b) de la seconde nappe de ceinture (7B), et
la paire de seconds bords extérieurs (7b) est située à l'extérieur dans la direction axiale du pneumatique de la paire de bords de bande de roulement (Te), et est située à l'intérieur dans la direction axiale du pneumatique de la paire de premiers bords extérieurs (7a).

4. Bandage pneumatique (1) selon la revendication 3, dans lequel
une distance (d1) dans la direction axiale du pneumatique entre la paire de seconds bords extérieurs (7b) et la paire de bords de bande de roulement (Te) est dans une plage allant de 5 à 20 mm.

5. Bandage pneumatique (1) selon la revendication 3 ou 4, dans lequel
la portion formant bande de roulement (2) a une paire de profils extérieurs (2b) qui s'étend vers l'extérieur dans la direction axiale du pneumatique depuis la paire de bords de bande de roulement (Te), la paire de profils extérieurs (2b) ayant une paire de positions radialement extérieures (P2) située radialement à l'extérieur de la paire de seconds bords extérieurs (7e) de la seconde nappe de ceinture (7B), et
quand une paire de secondes lignes droites virtuelles (L2) qui s'étendent depuis la paire de bords de bande de roulement (Te) jusqu'aux positions radialement extérieures respectives (P2) sont tirées, un angle (θ2) de la paire de secondes lignes droites virtuelles (L2) est dans une plage allant de 10 à 30 degrés par rapport à la paire de premières lignes droites virtuelles (L1).

6. Bandage pneumatique (1) selon l'une quelconque des revendications 3 à 5, dans lequel la paire de caoutchoucs de bords de ceinture (9) s'étend depuis une position à l'extérieur dans la direction axiale du pneumatique de la paire de premiers bords extérieurs (7a) jusqu'à une position à l'intérieur dans la direction axiale du pneumatique de la paire de seconds bords extérieurs (7b).

7. Bandage pneumatique (1) selon l'une quelconque des revendications 1 à 6, dans lequel chacun de la paire de caoutchoucs de bords de ceinture (9) a une largeur (W2) dans la direction axiale du pneumatique allant de 10 à 50 mm.

8. Bandage pneumatique (1) selon l'une quelconque des revendications 1 à 7, dans lequel chacune de la paire de bandes de bords (8B) a une largeur (W1) dans la direction axiale du pneumatique allant de 20 à 50 mm.

9. Bandage pneumatique (1) selon l'une quelconque des revendications 1 à 8, dans lequel une distance (d4) dans une direction radiale du pneumatique entre les bords radialement extérieurs (7e) respectifs de la couche de ceinture (7) et la couche de bande (8) est dans une plage allant de 0,2 à 2,0 mm.

10. Bandage pneumatique (1) selon l'une quelconque des revendications 1 à 9, dans lequel les câblés en fibres organiques ont une finesse totale allant de 900 à 5 500 dtex.

11. Bandage pneumatique (1) selon l'une quelconque des revendications 1 à 10, dans lequel une densité des câblés en fibres organiques est dans une plage allant de 30 à 60 extrémités par 5 cm de largeur de chaque bande de bord (8B).
